# EUROPÄISCHE PATENTANMELDUNG

(11) **EP 0 905 021 A1**
(43) Veröffentlichungstag der Anmeldung: **31.03.1999**
(21) Anmeldenummer: 98117888.2
(22) Anmeldetag: 21.09.1998
(51) Int. Cl.: B64F 3/00

(54) **Anlage zum quasi-freien Fliegen in einem Fluggerät**

(30) Priorität: 25.09.1997 DE 29717119 U
(71) Anmelder: Oepen, Wilhelm, 53902 Bad Münstereifel (DE); Oepen, Siegfried, 53894 Mechernich/Kommern (DE); Oepen, Karl, 53894 Mechernich (DE); Heiders, Hans-Peter, 53894 Mechernich (DE)
(72) Erfinder: Oepen, Wilhelm, 53902 Bad Münstereifel (DE); Oepen, Siegfried, 53894 Mechernich (DE); Oepen, Karl, 53894 Mechernich (DE); Heiders, Hans-Peter, 53894 Mechernich (DE); Harrap, Neil, Wellington (NZ)
(74) Vertreter: König, Werner, Dipl.-Ing.

(57) **Zusammenfassung**

Die Erfindung betrifft eine Anlage zum quasi-freien Fliegen in einem Fluggerät innerhalb eines begrenzten Raumes. Mit der Anlage soll es jedermann möglich sein, in einem Fluggerät selbständig und individuell zu fliegen, ohne daß dafür eine spezielle Ausbildung erforderlich ist.

Vorgeschlagen wird eine Anlage mit mindestens einem im Abstand über dem Erdboden und im wesentlichen parallel zu diesem verlaufenden, aus mindestens einem, an seinem jeweiligen Ende abgespannten Seil (1) bestehenden Seilverbund. An dem Seilverbund ist über mindestens ein mit dem Seilverbund drehbar verbundenes Tragelement mindestens ein Fluggerät (5) aufgehängt, das mindestens einen Fluggast aufnehmen kann und das mit einer motorisch angetriebenen Luftschraube (8) oder einem Düsenantrieb ausgerüstet ist.

## Beschreibung

Die Erfindung betrifft eine Anlage zum quasi-freien Fliegen in einem Fluggerät innerhalb eines begrenzten Raumes.

Das selbständige Fliegen, z.B. mit Sportflugzeugen oder Segelflugzeugen, ist nur einem sehr begrenzten Personenkreis zugänglich, da hierzu eine besondere Ausbildung und entsprechende Genehmigungen benötigt werden. Darüber hinaus ist Sport- und Segelfliegen mit einem erheblichen finanziellen Aufwand verbunden.

Um Flugerlebnisse einem größeren Personenkreis zugänglich zu machen, sind in den letzten Jahrzehnten neue Sportarten entwickelt worden wie beispielsweise das Drachenfliegen. Aber auch hierbei ist eine gewisse Mindestausbildung Voraussetzung. Außerdem sind hierfür nur bestimmte geografische Areale geeignet, so daß teilweise hohe Anfahrtzeiten und Kosten in Kauf genommen werden müssen.

Die Erfindung hat sich die Aufgabe gestellt, eine Anlage der eingangs genannten Art anzugeben, mit der es jedermann möglich ist, in einem Fluggerät selbständig und individuell zu fliegen, ohne daß dafür eine spezielle Ausbildung erforderlich ist.

Erfindungsgemäß wird die Aufgabe dadurch gelöst, daß die Anlage aus mindestens einem im Abstand über dem Erdboden und im wesentlichen parallel zu diesem verlaufenden, aus mindestens einem, an seinem jeweiligen Ende abgespannten Seil bestehenden Seilverbund aufgebaut ist, an dem über mindestens ein mit dem Seilverbund drehbar verbundenes Tragelement mindestens ein mindestens einen Fluggast aufnehmendes Fluggerät aufgehängt ist, das mit einer motorisch angetriebenen Luftschraube oder einem Düsenantrieb ausgerüstet ist. Das Tragelement kann ein Tragseil oder eine Tragstange sein.

Der Motor des Fluggerätes ist in seiner Drehzahl zweckmäßig durch den Fluggast steuerbar. Außerdem sollte das Fluggerät seitlich lenkbar sein. Zweckmäßig ist hierzu die Luftschraube bzw. der Düsenantrieb seitlich in einem begrenzten Winkel verschwenkbar.

Das Fluggerät wird vorteilhaft mit einem Cockpit ausgerüstet, in welchem die wesentlichsten Steuerelemente und Instrumente eines realen Flugzeuges nachgebildet sind. Zusätzlich ist eine über Funk oder leitungsgebunden vom Boden aus eine Verbindung zu den Steuerungselementen des Flugkörpers herzustellen, um, falls erforderlich, auf diesem Wege eine Richtungssteuerung oder ein Abschalten des Antriebes vornehmen zu können.

Das Fluggerät ist in jeder Phase des Fluges über das Tragseil oder die Tragstange an den Seilverbund gefesselt. Eine Steigbewegung des Fluggerätes, die das Tragseil entlastet, ist aufgrund der von vorn herein begrenzten Leistung des Antriebes nur in einem geringen Maße möglich. Somit wird auch ausgeschlossen, daß das Fluggerät bis in die Höhe des Seilverbundes fliegen und sich dort verfangen kann. Bei einer Tragstange kann die Auslenkung nach oben begrenzt sein.

In der Flugebene ist das Fluggerät jedoch ansonsten frei lenkbar, so daß Kurven in jeder Richtung geflogen werden können und dem Fluggast das Gefühl echten, selbstgesteuerten Fliegens vermittelt wird.

Bezüglich des Aufhängepunktes am Seilverbund sind zwei prinzipielle Möglichkeiten gegeben. Einmal kann dieser Punkt fest sein; dann ist das Fliegen innerhalb eines Raumes möglich, der einem Kugelabschnitt entspricht. Zum anderen kann der Drehpunkt des Tragelements entlang des Seilverbundes innerhalb eines vorgebbaren Bereiches des Seilverbundes translatorisch bewegbar sein.

Damit kann mit dem Fluggerät auch ein Streckenflug über eine vorgegebene Distanz absolviert werden.

Aus Sicherheitsgründen sollte die Aufhängung des Fluggerätes an dem Tragelement über mindestens an drei eine Ebene aufspannenden Punkten an dem Fluggerät angelenkte Verbindungselemente erfolgen, damit das Fluggerät auch im Langsamflug oder bewegungslosem Zustand immer in der Gleichgewichtslage gehalten wird. Das können wiederum Verbindungsseile oder - stangen sein.

Die Abspannung des Seilverbundes kann entweder an Masten oder an ohnehin erhöhten Geländepunkten erfolgen. Z. B. kann ein Führungsseil oder ein aus zwei Seilen bestehender Seilverbund an zwei Bergkuppen an Erdankern verspannt sein und dann ein Tal überbrücken.

Die translatorische Bewegungsmöglichkeit des Tragelements am Seilverbund muß immer so begrenzt sein, daß das Fluggerät nicht an einen Mast bzw. an einen Geländepunkt anstoßen kann.

Die gesamte Anlage einschließlich zweier Masten kann portabel ausgeführt sein, so daß sie auch für eine nur zeitweise Aufstellung in Freizeitparks, größeren Jahrmärkten u.ä. geeignet ist.

Bei Anlagen mit begrenztem Raum wird man ein einziges Fluggerät für die Anlage vorsehen. Steht entsprechender Platz zur Verfügung, so können auch mehrere Fluggeräte vorhanden sein. Hängen die Fluggeräte jeweils mit einem festen Drehpunkt an dem Seilverbund, so sind die Drehpunkte dann in einem solchen Abstand anzubringen, daß die Flugkörper auch in ihrer höchsten Flugebene nicht aufeinander bzw. auf das benachbarte Tragseil treffen können. Es ist so z. B. möglich, an einem Seilverbund gleichzeitig mehrere Fluggeräte in verschiedener Höhe zu betreiben und somit verschiedene 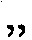 Wagnisstufen" bereitzustellen. Bei translatorischer Bewegungsmöglichkeit am Seilverbund müssen die Strecken entsprechend gegenseitig begrenzt sein. Möglich ist auch die Abspannung des Seilverbundes an Umlenkstellen des Seils in der Art, wie sie von Seilbahnen bekannt ist. Auf diese Art kann die translatorische Bewegung eines Tragelements in eine andere Richtung umgelenkt werden, so daß entsprechend große Flugareale entstehen. Der Seilverbund bildet dabei einen geschlossenen Polygonzug, an dem im sicheren Abstand voneinander mehrere Fluggeräte fliegen können, ohne sich gegenseitig erreichen zu können.

Das Fluggerät kann über eine entsprechende Gangway oder eine absenkbare Rampe bestiegen werden.

Es kann auch vorgesehen werden, daß das Tragseil absenkbar ist. Das Fluggerät kann dann vom Boden aus bestiegen werden und wird vor dem Losfliegen zunächst in seine Flugebene hochgezogen. Um Anfängern erst einmal ein Gefühl der Sicherheit zu geben, kann auch vorgesehen sein, das Fluggerät während des Fliegens durch Verkürzen des Tragseils in eine andere Flughöhe zu heben. Das kann entweder vom Boden oder durch den Fluggast selber steuerbar sein.

Vorteilhaft kann auch vorgesehen sein, daß das Fluggerät mit einer ausklinkbar mit einem Zugseil verbindbaren Seilzugkupplung versehen ist. Das Fluggerät kann dann durch eine zusätzliche Zugeinrichtung nach hinten gezogen werden, wobei es aufgrund der Aufhängung an seinem Tragseil gleichzeitig nach oben bewegt wird. Nach dem Ausklinken der Seilzugkupplung, was vom Boden, z.B. bei einer bestimmten Maximalhöhe oder vom Fluggerät gesteuert sein kann, wird das Fluggerät durch seine Abwärtsbewegung sofort hoch beschleunigt, wobei für den Fluggast eine Art Schwerelosigkeitsgefühl entsteht.

Das Fluggerät kann je nach Auslegung der Anlage für eine oder zwei Personen eingerichtet sein, in besonderen Fällen auch für noch weitere Personen, wobei dann allerdings das Gefühl des Pilotseins verloren geht.

Als Antrieb für eine Luftschraube kommen Benzin-, Gas- oder Elektromotoren in Frage. Elektromotoren haben den Vorteil, daß sie erstens ohne Abgase arbeiten und daß die Stromversorgung über Kabel möglich ist, die entlang des Seilverbundes und des Tragseils geführt sind, wobei die elektrische Verbindung an einem Gelenk zwischen Seilverbund und Tragseil über eine Schleifringanordung hergestellt wird. Möglich ist jedoch auch eine Stromversorgung über Batterien oder Brennstoffzellen.

Zur Lenkung des Fluggerätes wird bevorzugt der Antrieb selbst ausgenutzt, indem dieser seitlich in einem begrenzten Winkel verschwenkbar ist.

Möglich sind Geschicklichkeitsprüfungen für die Fluggäste. Z. B. kann vorgesehen sein, daß ein durch einen vertikal strahlenden Laser abgesteckter Kurs abzufliegen ist.

Vorgesehen sein kann auch, daß der Fluggast die Möglichkeit hat, bestimmte Zielmarken anzusteuern und dabei einen bestimmten Figurenflug zu absolvieren.

Ferner besteht die Möglichkeit mechanisch oder optisch an diesen Zielmarken 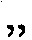 Treffer" zu erzielen. Erreicht wird dies durch die Ausstattung mit Neigungs- und Höhenmeßgeräten mit optischen Sendern aus den Zielmarken und Reflektion am Fluggerät oder mit mechanisch, z.B. mittels Druckluft abgeschossenen Körpern, z.B. Tennisbällen oder optischen z.B. Laser vom Fluggerät auf die Zielmarken. Nach absolviertem Flug erhält der Gast eine vollständige Auswertung aller Flugdaten und aller 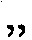 Treffer".

Hierzu werden die dem Fluggast im Cockpit angezeigten Werte parallel funktechnisch oder leitungsgebunden zur Bodenstation übertragen, dort mittels EDV aufbereitet und dokumentiert. Auf diesem Wege steht der Fluggast gleichzeitig über Sprechfunk in ständigem Kontakt zur Bodenstation, der es auf diesem Wege außerdem möglich den Antrieb des Fluggerätes ein- und auszuschalten. Eingeschaltet wird der Antrieb erst nach Erreichen der sicheren Ausgangsposition, abgeschaltet im Falle eventueller Irritationen des Fluggastes. In diesem Fall kommt das Fluggerät vermöge seines Gewichts, des Gewichts des Tragseiles und des Luftwiderstandes binnen kurzem zum Stillstand.

Mit den erwähnten Auswertungen kann der Fluggast ferner die im Rahmen der Überwachung der Anlage gefertigte Videoaufzeichnung seines Flugerlebnisses erhalten.

Die Erfindung soll nachstehend anhand von Ausführungsbeispielen näher erläutert werden. In den zugehörigen Zeichnungen zeigen
Fig. 1 eine Prinzipdarstellung der erfindungsgemäßen Anlage,
Fig. 2 das Fluggerät auf einer Startrampe im Ruhezustand,
Fig. 3 das Absenken der Startrampe,
Fig. 4 eine Variante des Tragseils mit integrierter Seilwinde,
Fig. 5 eine Variante mit erhöhter Startposition des Fluggerätes,
Fig. 6 eine Prinzipdarstellung einer mobilen Anlage und
Fig. 7 eine schematische Darstellung einer Draufsicht auf ein Fluggerät.

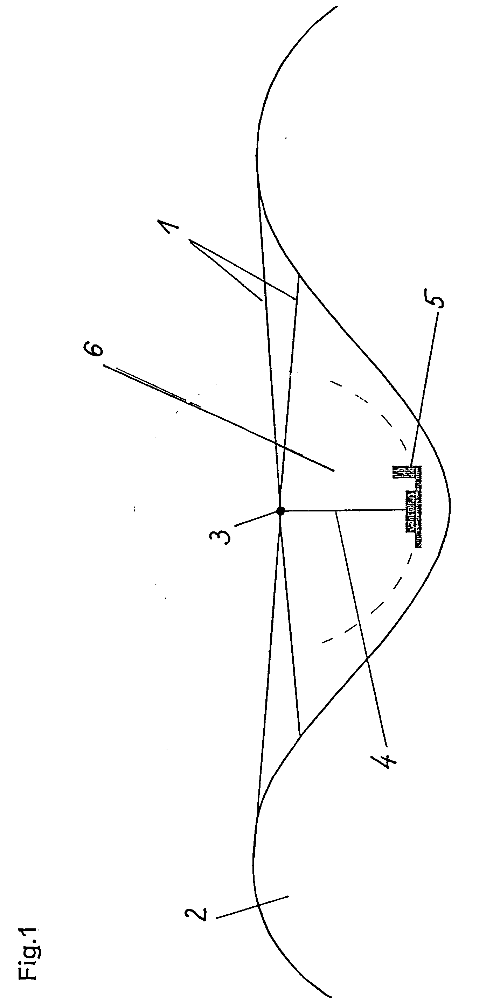

Die Anlage, wie sie Fig. 1 in einer Prinzipdarstellung zeigt, ist in einer für derartige Zwecke besonders geeigneten Berglandschaft aufgebaut. Zwei Führungsseile 1 sind zwischen zwei Bergkuppen 2 abgespannt. Die Führungsseile 1 sind zwei Drahtseile, die sich etwa in der Mitte zwischen den Bergkuppen 2 in einem Verbindungspunkt kreuzen und so einen Seilverbund bilden. Der Verbindungspunkt der Führungsseile 1 ist hier gleichzeitig Aufhängepunkt 3 für ein Tragseil 4, an dem wiederum ein Fluggerät 5 aufgehängt ist. Am Aufhängepunkt 3 ist das Tragseil 4 über ein Gelenk, z. B. ein Kreuzgelenk, mit den Führungsseilen 1 drehbar verbunden. Das Fluggerät 5 kann sich innerhalb eines Raumes 6 dann frei bewegen. Eine Tragseillänge von etwa 100 m ist hierbei beispielsweise durchaus erreichbar.

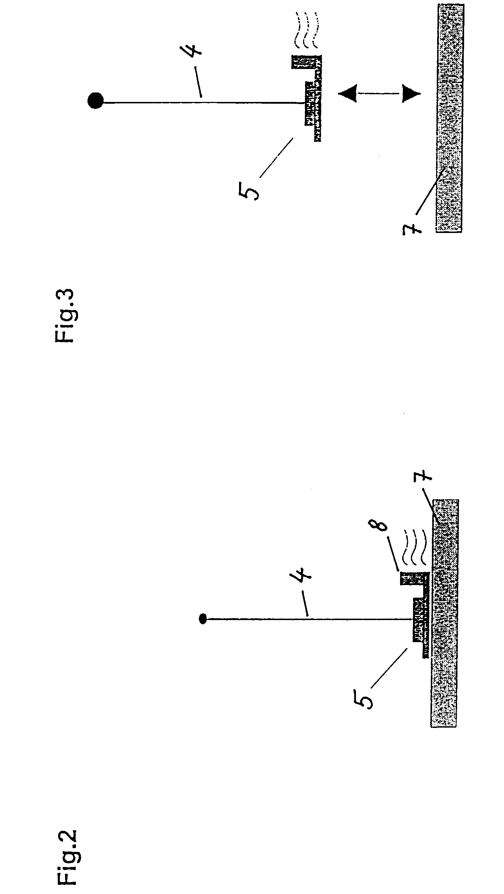

Die Figuren 2 und 3 zeigen die Startphase eines Fluggerätes 5, wenn eine absenkbare Startrampe 7 vorgesehen ist. Der Fluggast steigt nach vorausgegangener Instruktion in das Fluggerät 5 ein und wird dort durch Anschnallen gesichert. Eine Luftschraube 8, die in den Figuren nur schematisch angedeutet ist, wird gestartet. Darauf wird, wie Fig. 3 zeigt, die Startrampe 7 abgesenkt, der Flug kann beginnen. Der Antrieb des Fluggerätes 5 ist so ausgelegt, daß das Fluggerät 5 eine Geschwindigkeit von etwa 160 km/h entwickeln kann. Geschwindigkeiten bis zu 200 km/h sind ohne weiteres denkbar. Die Luftschraube 8 ist in einem Winkel von etwa 30° seitlich verschwenkbar, so daß das Fluggerät 5 mit der Luftschraube 8 lenkbar ist.

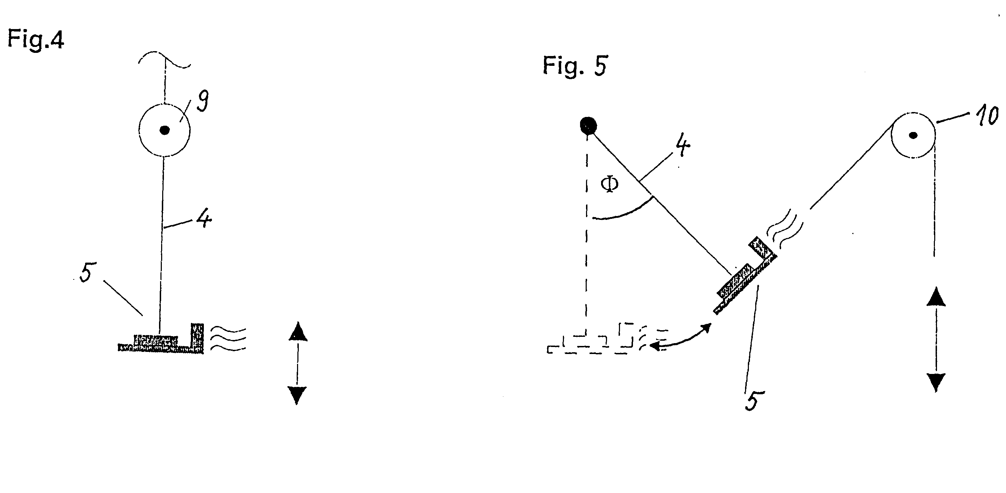

Fig. 4 zeigt eine weitere mögliche Variante für den Startvorgang. Das Tragseil 4 ist durch eine integrierte Seilwinde 9 längenverstellbar, so daß das Fluggerät 5 zum Starten bis zum Boden herabgelassen werden kann. Nachdem der oder die Fluggäste zugestiegen sind, wird die Luftschraube 8 gestartet und das Fluggerät 5 bis zu einer bestimmten Höhe vertikal angehoben.

Das Anheben des Fluggerätes 5 kann auch, wie Fig. 5 zeigt, mit einer Seilwinde 10 geschehen, die das Fluggerät 5 in eine Startposition bringt, aus der heraus es sofort durch die Schwerkraft beschleunigt wird. Das Ausklinken kann automatisch bei einer bestimmten Höhe des Fluggerätes 5 erfolgen oder auch durch den Fluggast selbst ausgelöst werden.

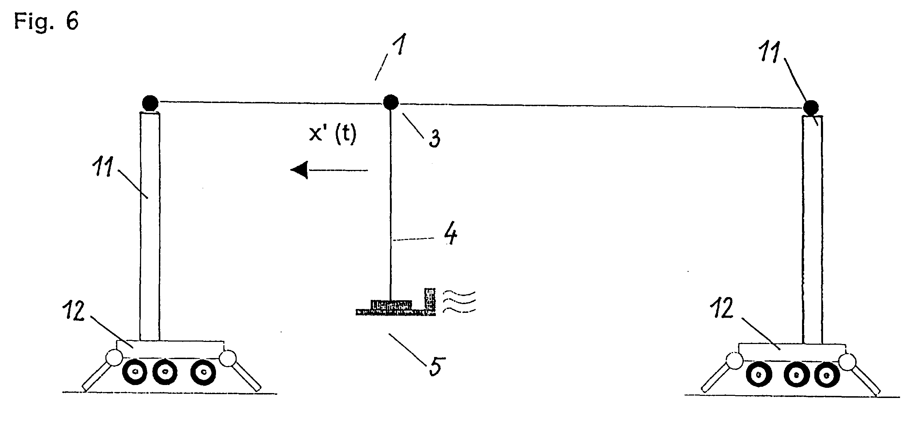

Fig. 6 zeigt eine Variante der Anlage, bei der der Aufhängepunkt 3 nicht fest angeordnet, sondern in Form einer Laufrolle ausgebildet ist. Das Fluggerät 5 kann somit auch zwischen den zwei Masten 11 in gewissem Umfang einen Streckenflug ausführen. Die Begrenzung der translatorischen Bewegungsmöglichkeit des Aufhängepunktes 3 muß dabei so gewählt werden, daß das Fluggerät 5 die Masten 11 nicht erreichen kann.

Fig. 6 zeigt gleichzeitig, daß die Anlage mobil ausführbar ist. Die Masten 11 sind zu diesem Zweck auf Spezialfahrzeugen 12 aufgebaut.

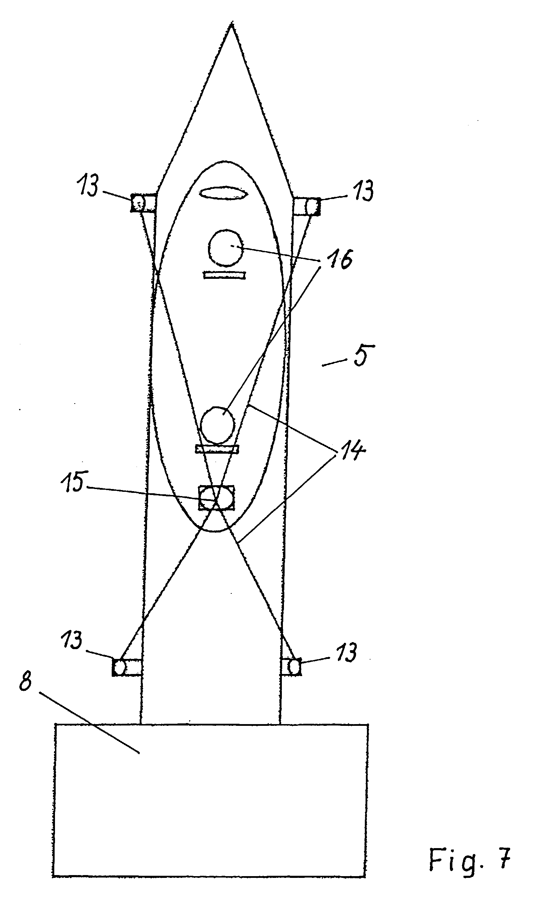

In Fig. 7, die eine Draufsicht auf ein Fluggerät 5 zeigt, sind die vier Aufhängepunkte 13 für Verbindungsseile 14 gezeigt, die in einem Verbindungspunkt 15 zusammengeführt und dort mit dem Tragseil 4 verbunden sind. Das Fluggerät 5 bleibt somit auch im Ruhezustand immer im Gleichgewicht.

Das Fluggerät 5 ist mit zwei Sitzen 16 für zwei Fluggäste bestückt. Die Luftschraube 8 befindet sich, ähnlich wie das bei propellerangetriebenen Booten der Fall ist, hinter den Sitzen 16.

## Patentansprüche

1. Anlage zum quasi-freien Fliegen in einem Fluggerät innerhalb eines begrenzten Raumes, **gekennzeichnet** durch mindestens ein im Abstand über dem Erdboden und im wesentlichen parallel zu diesem verlaufenden, aus mindestens einem, an seinem jeweiligen Ende abgespannten Seil (1) bestehenden Seilverbund, an dem über mindestens ein mit dem Seilverbund drehbar verbundenes Tragelement mindestens ein mindestens einen Fluggast aufnehmendes Fluggerät (5) aufgehängt ist, das mit einer motorisch angetriebenen Luftschraube (8) oder einem Düsenantrieb ausgerüstet ist.

2. Anlage zum quasi-freien Fliegen nach Anspruch 1, dadurch gekennzeichnet, daß das Tragelement mit dem Seilverbund an einem Drehpunkt (3) fest verbunden ist.

3. Anlage zum quasi-freien Fliegen nach Anspruch 1, dadurch gekennzeichnet, daß der Drehpunkt (3) des Tragelements entlang des Seilverbundes innerhalb eines vorgebbaren Bereiches des Seilverbundes translatorisch bewegbar ist.

4. Anlage zum quasi-freien Fliegen nach einem der vorhergehenden Ansprüche, dadurch gekennzeichnet, daß das Fluggerät (5) über mindestens an drei, eine Ebene aufspannenden Punkten (13) an dem Fluggerät (5) angelenkte Verbindungselemente an dem Tragelement aufgehängt ist.

5. Anlage zum quasi-freien Fliegen nach einem der vorhergehenden Ansprüche, dadurch gekennzeichnet, daß der Seilverbund an erhöhten Geländepunkten (2) abgespannt ist.

6. Anlage zum quasi-freien Fliegen nach einem der Ansprüche 1 bis 4, dadurch gekennzeichnet, daß der Seilverbund an Masten (11) abgespannt ist.

7. Anlage zum quasi-freien Fliegen nach Anspruch 6, dadurch gekennzeichnet, daß die Masten (11) als portable Aufbauten ausgeführt sind.

8. Anlage zum quasi-freien Fliegen nach einem der vorhergehenden Ansprüche, dadurch gekennzeichnet, daß das Tragseil (4) absenkbar ist.

9. Anlage zum quasi-freien Fliegen nach einem der vorhergehenden Ansprüche, dadurch gekennzeichnet, daß der Seilverbund an Umlenkungen abgespannt ist.

10. Anlage zum quasi-freien Fliegen nach einem der vorhergehenden Ansprüche, dadurch gekennzeichnet, daß die Luftschraube (8) des Fluggerätes (5) durch den Fluggast drehzahlsteuerbar ist.
